# EUROPEAN PATENT APPLICATION

(11) **EP 1 048 383 A1**
(43) Date of publication of application: **02.11.2000**
(21) Application number: 00610039.0
(22) Date of filing: 11.04.2000
(51) Int. Cl.: B23B 51/08, H02G 1/08

(54) **Cable holder for a drill**

(30) Priority: 12.04.1999 DK 48099
(71) Applicant: Hansen, Kjeld Apel, 3400 Hilleröd (DK); Larsen, Nicki Renée, 3320 Skaevinge (DK)
(72) Inventor: Hansen, Kjeld Apel, 3400 Hilleröd (DK); Larsen, Nicki Renée, 3320 Skaevinge (DK)
(74) Representative: Nielsen, Henrik Sten

(57) **Abstract**

A device (30) for a drill (10) is arranged for drawing a wire or a cable (40, 50) attached to the device (30) through a hole (21, 27) in a wall (22, 26) made by means of the drill (10). The drill (10) constitutes an auger bit or a twist drill with a circular cylindrical drilling body and with one or more, preferably two grooves shaped in the outer cylinder surface of the circular cylindrical drilling body and extending from a drill bit or edge (16) positioned at the extreme end of the drill (10) towards a shank positioned opposite the mentioned extreme end for fastening the drill (10) in a drill chuck of a drilling machine. The device (30) comprises a wire or cable fastening means (36) as well as a number of helical spring legs, preferably two spring legs (32, 34) corresponding to the mentioned number of grooves of the drill, and the spring legs (32, 34) have such lengths and such flectional elasticities that the device can be mounted by being screwed on to the drill (10) and is secured on the drill (10) at the extreme end of the drill in such a way that the wire or cable fastening means of the device is positioned opposite said extreme end of the drill and that the spring legs of the device are picked up concealed in the said grooves.

## Description

The present invention relates to a device for a drill and for drawing a wire or a cable attached to the device through a hole in a wall made by means of the drill constituting an auger bit or a twist drill with a circular cylindrical drilling body and with one or more, preferably two grooves shaped in the outer cylinder surface of the circular cylindrical drilling body and extending from a drill bit or edge positioned at the extreme end of the drill towards a shank positioned opposite the extreme end for fastening the drill in a drill chuck of a drilling machine.

To artisans including in particular electricians, telephone fitters, computer installers and the like, it is a well-known problem that in connection with drawing wires or cables through walls, storey partitions, ceilings and the like, problems may arise when one or more wires or cables are drawn through a bore hole made in the wall, storey partition, ceiling etc. in question. E.g. in connection with drawing wires or cables through an insulated wall or a corresponding floor, it may be difficult to draw the wire or the cable through the insulating material, which may in elderly buildings consist of cellular material, such as sand or clay, possibly partly bound together by mortar and a lattice structure in the form of half-mats or chicken wire, and in newer buildings consisting of mineral fibreboard or blown mineral fibre particles. Thus, it is a problem of frequent occurrence that the insulating material so to speak "collapses" or falls in after the drill has been led out of the bore whereupon the bore is partly or even wholly closed whereupon it is impossible to draw a wire or a cable through the wall or storey partition etc. in question.

In addition to this above-mentioned problem in connection with drawing wires or cables through an insulating material behind a wall or behind a floor, the drawing of a cable or a wire through a wall of a certain thickness and possibly also with an inner cavity is a general problem in connection with installation work, in particular when the access conditions are narrow, which often is the case when for aesthetic reasons the cables and wires should be mounted as discreetly as absolutely possible.

The above-mentioned problems have actually been previously known and, thus, certain not quite satisfying prior-art solutions to these problems have been described. Thus, an auger bit or a twist drill is described in US patent 3,697,188, wherein close to the point of the drill a hole has been established in which a cable or a wire may be attached and pulled through the bore hole by means of the drill itself. This drill is, however, a specially adjusted drill which can only with difficulty be shaped with a very small diameter and, as a result of the drilling, it has a reduced strength compared to a conventional stone drill or wood borer.

US patent 549,231 discloses a particular drill being used for increasing the diameter of a through hole and being considered as a kind of swaging tool establishing a larger bore diameter as the tool in question at the extreme free end has a cylindrical body which in diameter corresponds to the hole previously made and which may be used for fastening a wire or a cable after reboring the bore diameter and, thus, is used for pulling the wire or cable back through the rebored hole after the attachment to the tool.

Other publications including GB-2,301,788, FR-2,666,040, US-5,310,294, US-5,529,443, US-033,703 and US-5,820,249 disclose other solutions to the above-mentioned technical problems all of them, however, utilizing particular drills with gripping and locking devices or requiring the replacement of the tool after the drilling and consequently complicating or strenuous operations.

A purpose of the present invention is to provide a device of the kind mentioned above which device can immediately be attached to a twist drill or an auger bit after the drill has been used for making a through hole and which device does neither require the use of particular drills nor the replacement of drilling equipment during the drilling operation.

A further purpose of the present invention is to provide a device for a drill which device solves the above-mentioned problems in a simple way and does not require the use of a particular drill or the change of the tool in a drilling machine prior to drawing a wire or a cable through the through hole or bore in the mentioned wall made by the drill mounted on the drilling machine.

In this connection it should be noted that the terms bore and hole are used as synonyms indicating an aperture of a homogeneous or non-homogeneous structure, in particular a wall, made by means of a twist drill or an auger bit. It should also be noted that the term a wall is to be understood as a generic term comprising an interior wall, an exterior wall, a multilayer wall, an insulated or non-insulated wall and structures not being positioned, the way walls are normally mounted, in an orientation deviating from vertical position, e.g. a sloping wall, a floor, a partition, a roof surface, etc.

According to the teachings of this invention, the above-mentioned purposes are reached by a device of the above-mentioned kind which device according to the present invention is characterized in that the device comprises a wire or cable fastening means as well as a number of helical spring legs, preferably two spring legs corresponding to the mentioned number of grooves of the drill, and that the spring legs have such lengths and such flectional elasticities that the device can be mounted by being screwed on to the drill and is secured on the drill at the extreme end of the drill in such a way that the wire or cable fastening means of the device is positioned opposite the extreme end of the drill and that the spring legs of the device are picked up concealed in the said grooves.

Thus, the device according to the present invention constitutes a device being shaped as a springy screwing device as the spring legs are provided with a lead corresponding to the grooves of the drill and with a reduced diameter corresponding to the width of the drill between the grooves so that the spring legs tighten round the drill in the grooves after the device has been screwed on to the drill, thereby preventing the device from being pulled off the drill in the longitudinal direction of the drill. The length of the spring legs and the flectional elasticity of the spring legs must be adapted in such a way that the device is secured in a safe and reliable way at the end of the drill, but at the same time adapted in such a way that it will be easy and uncomplicated to screw the device on to the drill without using particular tools and without being very strenuous.

In accordance with the teachings of this invention, a particular feature of the device relates to the fact that the spring legs of the device have such a limited extent transverse to the longitudinal direction of the device or the drill that the spring legs are kept concealed in the grooves of the drill whereupon the drill with attached device can be moved unhindered backwards and forwards in relation to the hole made by means of the drill, whereupon a wire or a cable mounted on the wire or cable fastening means of the device may immediately be pulled through the hole without particular insulating material collapsing behind the extreme end of the drill thereby blocking the drawing of the wire or the cable. Owing to the helical shaping of the spring legs engaging with the grooves of the twist drill or auger bit, a pull at the wire or cable fastening means in the longitudinal direction of the drill will immediately cause an increased locking effect of the device as the spring legs are pressed further into the grooves thereby keeping the device more tight in the grooves of the twist drill or auger bit to prevent dismounting upon removing the device.

According to generally or conventionally used stone or wood/metal drills, two opposite grooves are provided in the twist drill or auger bit being constructed as right-handed screws in accordance with the general rotating direction of drilling machines. Correspondingly, the device according to the present invention is preferably provided with two spring legs, correspondingly constituting right-handed screws. However, in alternative particular embodiments the device according to the present invention may be provided with more than two spring legs just as for particular applications a twist drill with opposite turns, i.e. left-hand turns, is possible whereupon, in accordance with the teachings of this invention, opposite spirally twisted spring legs may be provided in an alternative or particular embodiment of the device according to the present invention.

According to the above description, the device according to the present invention consists of two components being constituted by the wire or cable fastening means and the helical spring legs, preferably provided to the number of two. The said wire and cable fastening means may per se be constituted by an arbitrary appropriate gripping or holding means which can secure a wire or a cable, thus, being constituted by an eye-shaped or hooked element which may be connected with the spring legs characteristic of the invention by a connection element in the form of a fixed connection element or alternatively by a joint coupling, e.g. a chain link. In accordance with the presently preferred embodiment of the device according to the present invention, the wire and cable fastening means is constituted by an eye made from the same material as the spring legs and according to the above-mentioned embodiment intended for usage in connection with per se conventional twist drills or auger bits, the wire or cable fastening means forming the mentioned eye constitutes extensions of the two spring legs of the device, thus, in this advantageous and very simple embodiment being constituted by a long, integrated wire- or bar-shaped element forming an eye round the centre of the element and from the eye passing into the two helical spring legs.

According to the alternative embodiments described above, the device according to the present invention may be cast preferably in one piece or alternatively in more pieces of plastic material and preferably in a single injection moulding operation. The device according to the present invention may of course alternatively be composed of several single components, e.g. according to the above-mentioned alternative embodiment with a joint coupling between the wire or cable fastening means and the helical spring legs just as instead of casting operations, in particular injection moulding operations, another production technique may be used, e.g. rolling, punching, compression moulding or combinations of such machining or production techniques and possibly casting operations.

As regards the choice of material, such materials are preferred having the required flectional elasticity, but not permitting a noticeable stretching, such as in the case of e.g. a rubber based material. The preferred materials for the device according to the present invention consist of plastic materials, such as PVC, PP, PE or ABS or nylon or composite materials, such as carbon fibre or glass fibre reinforced plastic or preferably metal wire, such as copper, iron or aluminium wire having a thickness of 0.05-2 mm, such as 0.1-1 mm, dependent on the material and the application, and advantageously being embedded in a protecting plastic mantle to prevent a tearing between the metal wire material, from which the device has been made, and the material of the twist drill or auger bit.

In order to make it easy to screw the device according to the present invention on to the drill and at the same time secure it in the intended position at the extreme end of the drill secured at the engagement of the helical spring legs with the grooves of the twist drill or auger bit, as mentioned above, it is preferred, dependent on the material chosen for the spring legs, that the spring legs have a length corresponding to between 0.5 and 5, such as between 1 and 4, preferably between 2 and 3 whole turns or threads along the grooves of the twist drill. With a length of the spring legs corresponding to 2-3 turns or threads along the grooves of the twist drill, a safe and reliable securing of the device in relation to the twist drill or auger bit is obtained, but at the same time it is ensured that it is simple and not very strenuous partly to mount the device, partly to dismount the device in relation to the twist drill or auger bit.

The present invention will be further described with reference to the drawing, in which
- Fig. 1: shows a drill bored through a two-layer wall with an intermediary insulating material and a device according to the present invention for the attachment of a cable or a wire for drawing the cable or the wire through the hole in the wall made by means of the drill,
- Fig. 2: shows, corresponding to Fig. 1, the drawing of one or more wires or cables through the two-layer wall shown in Fig. 1 by means of the device of Fig.1, and
- Fig. 3: shows alternatively an application of the device in combination with a drill where by means of the drill, unlike the operation schematically shown in Fig. 1 and 2, a hole or a bore is established through two separate, mainly parallel plates or wall parts in an angle not being perpendicular to the surface of the wall elements, but on the contrary forming an oblique angle.

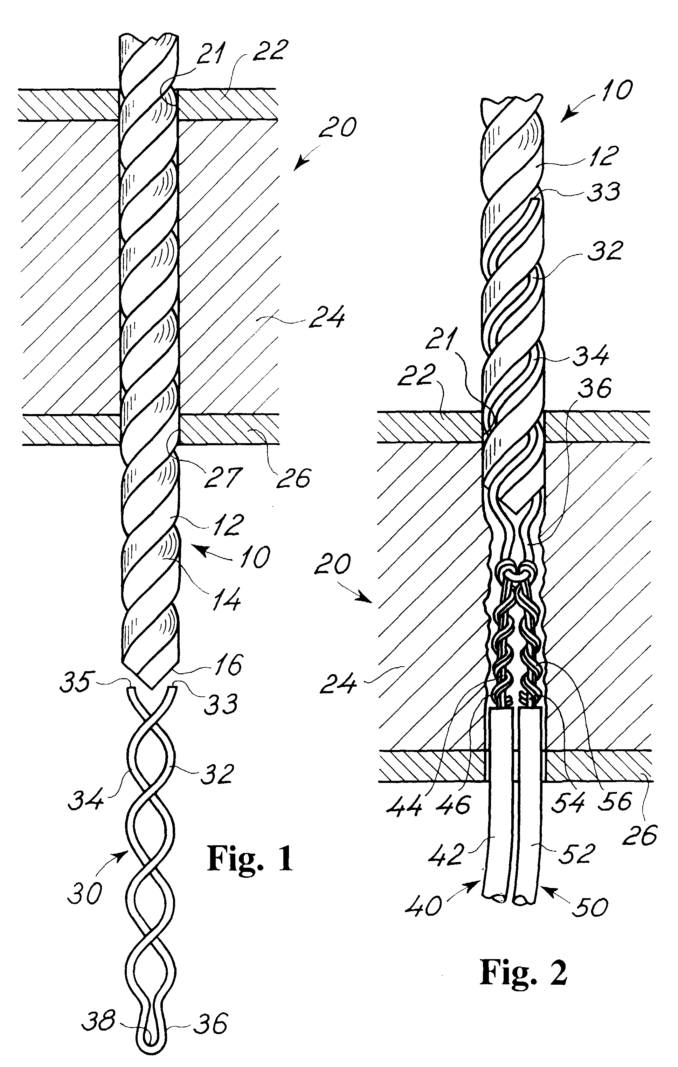

Fig. 1 and 2 are schematic and partly sectional views of two steps of a process during which wires or cables are drawn through a hole or a bore established in advance by means of a drill 10 through a double wall structure 20 comprising two single wall elements 22 and 26 between which an insulating material 24 has been positioned, typically consisting of mineral fibreboard, such as glass wool or rock wool plates. In the two wall plate elements 22 and 26 two coaxially positioned holes, 21 and 27 respectively, have been established, through which the drill 10 extends, the drill 10 holding back the insulating material 24 and preventing the insulating material from collapsing and closing the hole made through the insulating material.

The drill 10 itself constitutes per se a conventional twist drill or auger bit comprising a circular cylindrical drilling body 12 in which two diametrically opposite helical grooves are provided, of which one is designated the reference numeral 14, this helical groove designated the reference numeral 14 ending behind a cutting edge or knife-edge 16, whereas the opposite helical groove starts in front of the knife-edge 16.

As per se illustrated in Fig. 2, pulling out the drill 10 itself will cause a whole or partial closing of the hole in the insulating material 24 made by means of the drill as the insulating material collapses and wholly or partly closes the hole as a result of the own elasticity of the material. To make it possible to draw two cables 40, 50, shown in Fig. 2, through the coaxially positioned holes in the wall plate elements 22 and 26 and through the insulating material 24, a device 30 is provided in accordance with the teachings of this invention, being made from metal or plastic or preferably from a metal core with an outer plastic coat used for preventing the metal core of the device from tearing at the material of the helical grooves in the twist drill or auger bit 10 when the device is mounted on the drill, as shown in Fig. 2.

The device 30 consists of two spirally twisted spring legs 32 and 34 ending in two ends, 35 and 33 respectively, preferably being closed by plastic like the spring legs themselves. The spring legs 32 and 34 each form two threads or turns in the helical grooves and are originally formed with an inner width smaller than the thickness of the core of the twist drill or auger bit 10 to ensure that the spring legs tighten round the twist drill when the device 30 is screwed on to the twist drill or auger bit 10 from the lower free end of the twist drill or auger bit 10, as shown in Fig. 1. Upon this screwing on, the device 30 is led from the position shown in Fig. 1 in relation to the twist drill or auger bit to the position shown in Fig. 2 whereby the extreme end of the device, forming an eye 36 with an aperture 38, is positioned opposite the point of the twist drill or auger bit 10.

As is evident from Fig. 2, an elastic deformation of the spring legs 32 and 34 takes place when the device 30 is screwed on to the twist drill or the auger bit 10 so that the aperture between the spring legs at the eye 36 is increased, whereby the eye is partly opened, as is evident from Fig. 2. As shown in Fig. 2, the eye 36 is used for picking up and securing the cable or wire ends of the cables 40 and 50, in the embodiment shown in Fig. 2 being constituted by multicore cables with outer coatings, 42 and 52 respectively, surrounding two inner wires, 44, 46 and 54, 56 respectively. As shown in Fig. 2, the cables 40, 50 are drawn through the hole 27 in the wall plate element 26 and further through the insulation 24 when the drill twist or auger bit is pulled upwards whereby the device is secured at the end of the twist drill or auger bit as this securing of the device 30 in relation to the twist drill or the auger bit is ensured partly by the material properties of the spring legs 32 and 34, in particular the flectional elasticity, partly by the length of the spring legs, causing a complete surrounding or twisting of the spring legs 32 and 34 of the device 30 into the helical grooves of the twist drill or auger bit 10.

After the drill 10 has been led upwards and detached from the wall 20, the device 30 is again screwed off the twist drill or auger bit 10, whereupon the cables or wires 40 and 50 are dismounted or cut off the device 30, which may then be used again in connection with a new drawing of wires or cables.

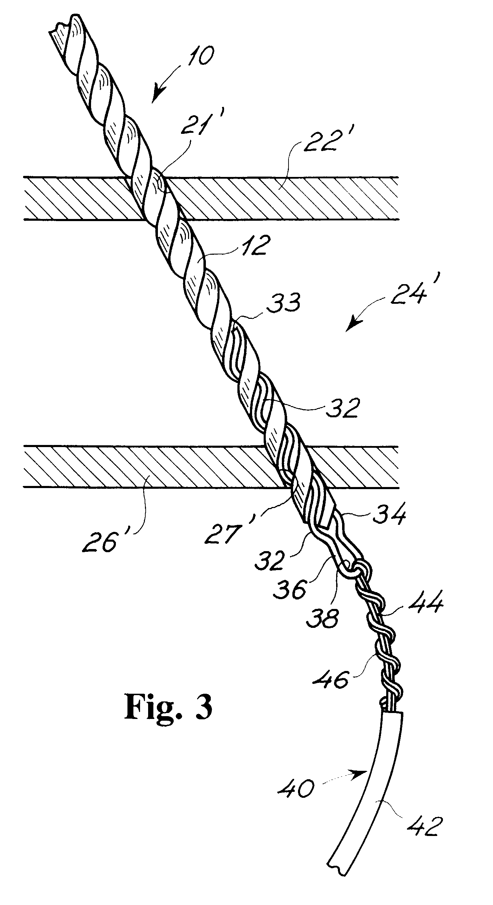

It should be noted that the device according to the present invention is not only intended for facilitating the drawing of wires or cables in connection with holes being drilled perpendicular to a wall, such as the wall 20 shown in Fig. 1 and 2, but may also advantageously be used in the case shown in Fig. 3 where by means of the drill 10 two holes 21' and 27' have been made in two, mainly parallel wall plate elements 22' and 26', between which a cavity 24' has been established. The hole through the wall plates 22' and 26 is not positioned in an orientation perpendicular to the wall plate elements, as is evident from Fig. 3, but on the contrary in an oblique orientation which would make a drawing of a wire or a cable through the holes or the bores 21' and 27' very difficult, in particular if, as a result of particular access conditions, problems should arise in connection with aiming through the holes 21' and 27'. In this situation, the device 30 is used in the same way as described above and is screwed on to the twist drill or the auger bit 10 to allow the drawing of the wire or the cable 40 through the two holes 21' and 27' and, thus, through the two parallel wall plate elements 22' and 26'.

Although the invention has been described with reference to a preferred embodiment of the device for the use of drawing wires or cables through single- or multilayer walls, the invention is not limited to this application, but may also be used in connection with drawing cables through floors, storey partitions, ceilings etc. The device according to the present invention may be made from a wide range of various materials, for instance metal wire, in particular copper, iron or aluminium wire being coated with an outer protecting plastic in the form of PVC, PP, PE or similar plastic materials. Alternatively, the device according to the present invention may be integrally cast in one or more plastic materials for achieving the same strength and even improved strength and flectional elastic properties compared to a corresponding metal wire element. Although the eye 36 and the two spring legs 32 and 34 are made in a single-piece construction in the above-mentioned embodiment, the eye may alternatively be formed as a separate component being connected with the two spring legs 32 and 34 for example by a ball joint or a chain link. Thus, the device according to the present invention may alternatively also comprise a connecting or coupling element being attached to the eye 36 shown in Fig. 1-3 as a kind of detector to ensure that the device 30 is led upwards and out of the wall corresponding to the situation shown in Fig. 1 and 2, prior to pulling at the cable or the cables, e.g. the cables 40 and 50 shown in Fig. 2, which are subsequently pulled through the wall etc. by pulling this connecting or coupling element corresponding to a presently conventional detector.

## Claims

1. A device (30) for a drill (10) and for drawing a wire or a cable (40, 50) attached to said device (30) through a hole (21, 27) in a wall (22, 26) made by means of said drill (10), said drill (10) constituting an auger bit or a twist drill with a circular cylindrical drilling body and with one or more, preferably two grooves shaped in the outer cylinder surface of said circular cylindrical drilling body and extending from a drill bit or edge (16) positioned at the extreme end of said drill (10) towards a shank positioned opposite said extreme end for fastening said drill (10) in a drill chuck of a drilling machine, characterized in said device (30) comprising a wire or cable fastening means (36) as well as a number of helical spring legs, preferably two spring legs (32, 34) corresponding to the mentioned number of grooves, said spring legs (32, 34) having such lengths and such flectional elasticities that said device can be mounted by being screwed on to said drill (10) and is secured on said drill (10) at said extreme end of said drill in such a way that said wire or cable fastening means is positioned opposite said extreme end of said drill and that said spring legs of said device are picked up concealed in said grooves.

2. The device according to claim 1, said device having two spring legs (32, 34) in all.

3. The device according to claim 1 and claim 2, said wire or cable fastening means (36) being constituted by an eye (36) made from the same material as said spring legs.

4. The device according to claim 2 and claim 3, said wire or cable fastening means (36), which forms said eye, constituting extensions of said spring legs of said device.

5. The device according to any of the claims 1-4, said device being cast preferably in one piece or alternatively in more pieces of plastic material and preferably in a single injection moulding operation.

6. The device according to any of the claims 1-4, said device being cast from a plastic material, such as PVC, PP, PE or ABS or made from carbon fibre or glass-fibre reinforced plastic, nylon or metal wire, preferably copper, iron or aluminium wire or combinations thereof.

7. The device according to any of the preceding claims, said spring legs having a length corresponding to between 0.5 and 5, such as between 1 and 4, preferably between 2 and 3 whole turns or threads along the grooves of the twist drill.
